Europäisches Patentamt

**European Patent Office**

**Office européen des brevets**

(11) Veröffentlichungsnummer : **0 008 147**
**B1**

# EUROPÄISCHE PATENTSCHRIFT

(12)

(45) Veröffentlichungstag der Patentschrift :
16.02.83

(21) Anmeldenummer : **79200427.7**

(22) Anmeldetag : **02.08.79**

(51) Int. Cl.³ : **B 61 D 17/02**

(54) **Schienenfahrzeug für hohe Geschwindigkeiten.**

(30) Priorität : **09.08.78 CH 8481/78**

(43) Veröffentlichungstag der Anmeldung :
**20.02.80 Patentblatt 80/04**

(45) Bekanntmachung des Hinweises auf die Patenterteilung : **16.02.83 Patentblatt 83/07**

(84) Benannte Vertragsstaaten :
**AT BE CH DE FR GB IT LU NL SE**

(56) Entgegenhaltungen :
**BE A 417 270**
**DE A 635 018**
**DE A 2 139 496**
**FR A 719 055**
**FR A 2 273 700**

**Z.E.V. GLASERS ANNALEN, Vol. 101, Nr. 4, April
1977, Seiten 97, 98 Hamburg, DE. H. NEPPERT et
al. : « Vergleich zwischen Modell- und Originalmessergebnissen sowie der Theorie zur Schnell-
bahn-Aerodynamik »**

(73) Patentinhaber : **Schweizerische Eidgenossenschaft
vertreten durch Eidgenössisches Flugzeugwerk
CH-6032 Emmen (CH)**

(72) Erfinder : **Baeriswyl Bruno
Kreuzbuchstrasse 36
CH-6054 Meggen (CH)**

(74) Vertreter : **Frauenknecht, Alois J.
co/ PPS Polyvalent Patent Service AG Fohrhölzlistrasse 19
CH-5443 Niederrohrdorf (CH)**

## Schienenfahrzeug für hohe Geschwindigkeiten

Die vorliegende Erfindung bezieht sich auf ein Schienenfahrzeug für hohe Geschwindigkeiten mit einer zum Herabsetzen der aerodynamischen Wellen bestimmten Kopf- und/oder Heckform mit wenigstens einer die Front- und/oder Heckseite abgrenzenden Stirnwand, wobei wenigstens die eine Stirnwand an die übrigen Oberflächenteile des Fahrzeugs angeschlossen ist.

Zur Erhöhung der Transportleitung des Schienrollmaterials ist es bekannt (Eck, Technische Strömungslehre, Springer Verlag, 7. Auflage, Berlin 1966, S. 272-274), Fahrzeuge stromliniengerecht zu gestalten.

Bei Fahrgeschwindigkeiten über 100 km/h treten beim Kreuzen von Schienenfahrzeugen und bei deren Einfahrt in Tunnels Druck- und Sogwellen auf, welche grosse Sicherheits-, Stabilitäts- und Komfortprobleme hervorrufen.

Diese Probleme wurden bisher ebenfalls durch kostspielige stromlinienförmige Gestaltung vor allem des Lokomotivkopfes, fest eingebaute Fenster etc. sowie durch bauliche Massnahmen in der Streckenführung, wie eingleisige, grossprofilige Tunnels, Erweiterung der Tunnelröhren am Eintritt und grossen Abstand zwischen den einzelnen Geleisen zu lösen versucht (« Tokaido-Express »).

Im weiteren ist ein Tunnel-Fahrzeug mit kreiszylinderischem Querschnitt für den Einsatz im transsonischen Geschwindigkeitsbereich bekannt (FR-A 2 273 700). Dieses weist zur Reduktion des aerodynamischen Widerstands frontseitig eine fensterlose, rotationssymmetrische kegelförmige Spitze auf. Diese Spitze wird bei Kurvenfahrt durch eine Servoeinrichtung aus ihrer symmetrischen Ruhelage verschoben und der Kurvenform sowie der momentanen Fahrgeschwindigkeit angepasst, so dass zwischen dem Fahrzeug und der Tunnelwand keine lokalen Ueberschallgebiete entstehen.

Der im Anspruch 1 angegebenen Erfindung liegt die Aufgabe zugrunde, auf konstruktiv einfache Weise auch mit bisherigem Schienenrollmaterial höhere Fahrgeschwindigkeiten zuzulassen und damit die Transportleistung erhöhen zu können.

Der Vorteil der Erfindung liegt insbesondere darin, dass auch auf einem bereits bestehenden Streckennetz und bei nicht oder nur geringfügig geänderten Chassis von Schienenfahrzeugen, insbesondere Lokomotiven, die aerodynamischen Wirkungen beim Kreuzen und bei Tunneleinfahrten enorm erduziert werden können, was u. a. eine Erhöhung der Sicherheit im bisherigen Schienenverkehr erbringt.

Unter der im Anspruch 1 genannten Frontkante, bzw. der Heckkante, wird ein Konstruktionsteil verstanden, welches derart gestaltet ist, dass seine an sich beliebige Form im wesentlichen keilförmigen Charakter aufweist.

Erfindungsgemäss wird zur Gestaltung der Kopfform von Schienenfahrzeugen die spitzwinklige Kante dem Gegenverkehr zugewandt, während diese Kante im Heckbereich dem Gegenverkehr abgewandt ausgeführt ist.

Vorteilhafte Weiterbildungen der Erfindung sind in den Unteransprüchen beschrieben.

Mit der Ausgestaltung nach Anspruch 2 erreicht man besonders einfach herzustellende Karosserieformen mit ebenen Fensterflächen.

Die Ausführungsform nach Anspruch 3 geht von der Erkenntnis aus, dass wohl die Kopfform eines Schienenfahrzeugs im entscheidenden Mass die aerodynamische Druck- und Sogwelle beeinflusst, dass jedoch vorspringende oder einspringende Ecken eine Erhöhung der hochturbulenten, ungeordneten Strömung bewirken und sich der Bugwelle überlagern.

Eine Ausgestaltung nach Anspruch 4 ermöglicht eine gleichartige Ausführung der Front- und Heckseite eines Schienenfahrzeugs, ohne dass schwerwiegende strömungstechnische Nachteile auch bei einem Wechsel der Fahrrichtung in Kauf genommen werden müssen.

Eine zweckmässige Weiterbildung stellt die Ausführung nach Anspruch 5 dar ; durch eine beispielsweise mechanisch-elektrische Verknüpfung der Umschaltung auf den in Fahrrichtung liegenden Führerstand eines Triebfahrzeugs mit der Steuerung der Strömungs-Abrisskante kann der Vorgang ihres Ausfahrens automatisiert werden.

Die Erfindung wird im folgenden anhand schematischer Zeichnungen näher erläutert.

Es zeigen :

Figur 1 eine erste Variante einer Kopfform eines Schienenfahrzeugs,

Figur 1a einen Längsschnitt durch die Vertikalachse A-A von Fig. 1,

Figur 1b einen Längsschnitt durch die Querachse B-B von Fig. 1,

Figur 2 eine zweite Variante einer Kopfform eines Schienenfahrzeugs,

Figur 2a einen Querschnitt durch die Vertikalachse A'-A' von Fig. 2,

Figur 2b einen Querschnitt durch die Querachse B'-B' von Fig. 2,

Figur 3 eine dritte Variante einer Kopfform eines Schienenfahrzeugs,

Figur 3a einen Querschnitt durch die Vertikalachse A''-A'' von Fig. 3,

Figur 3b einen Querschnitt durch die Querachse B''-B'' von Fig. 3,

Figur 4 den charakteristischen Verlauf des Druckunterschiedes als Folge der aerodynamischen Kopfwelle in Funktion der Zeit und des Ortes im Vergleich zu bisherigen Lösungen,

Figur 5 eine Zugskomposition mit herabgesetzter Heckwelle im Bereich des Triebfahrzeugs und des ersten nachfolgenden Wagens,

Figur 6 eine beispielsweise Ausführung eines Triebfahrzeugs mit gleichartig ausgestalteter Front- und Heckpartie.

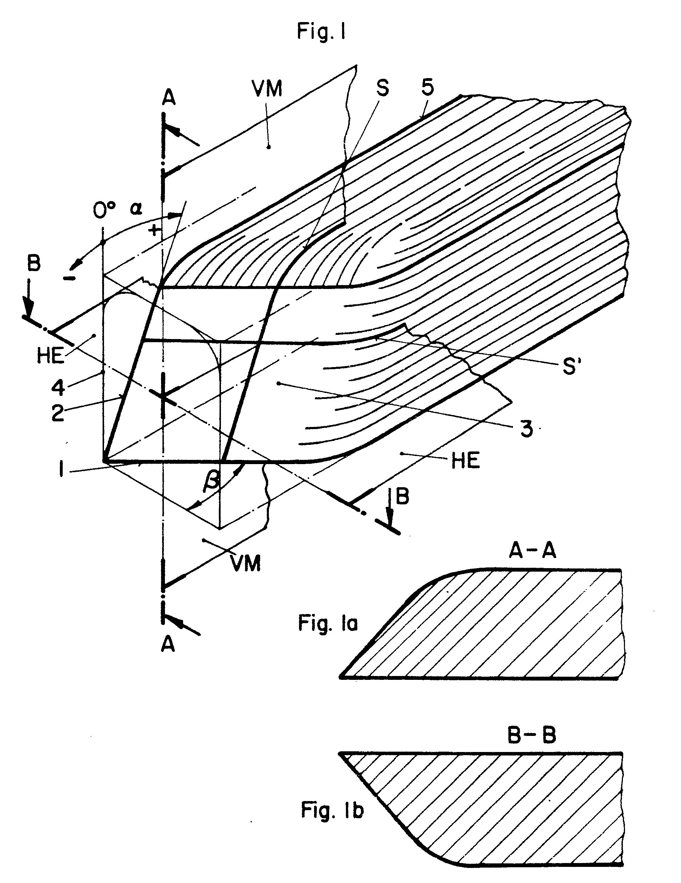

Gemäss Fig. 1 ist mit 1 ein Keil mit einer Frontkante 2 bezeichnet. Eine annähernd ebene Stirnwand 3 geht in eine Aussenhaut 5 über und symbolisiert die Kopfform eines Schienenfahrzeugs. Hervorgegangen ist diese Form aus einem rechteckigen Grundprofil 4.

Die Lage der Stirnwand 3 ist einerseits durch eine Vertilkalachse A-A und eine in einem vertikalen Mittelschnitt VM liegende Schnittlinie S und andererseits durch eine Querachse B-B und eine in einer Horizontalebene HE liegende weitere Schnittlinie S' bestimmt.

Zwischen der Vertikalachse A-A und der Schnittlinie S stellen sich Winkel $\alpha$ ein, welche sowohl positive als auch negative Werte einnehmen können.

Demgegenüber bestimmt die Querachse B-B und die Schnittlinie S' Winkel $\beta$ lediglich in einem bevorzugten positiven Wertbereich.

Aus Fig. 1a und Fig. 1b sind die aus Fig. 1 resultierenden Längsschnitte A-A im vertikalen Mittelschnitt VM und B-B in der Horizontalebene HE ersichtlich.

In den nachfolgenden Figuren sind für gleiche Teile gleiche Bezugsziffern verwendet.

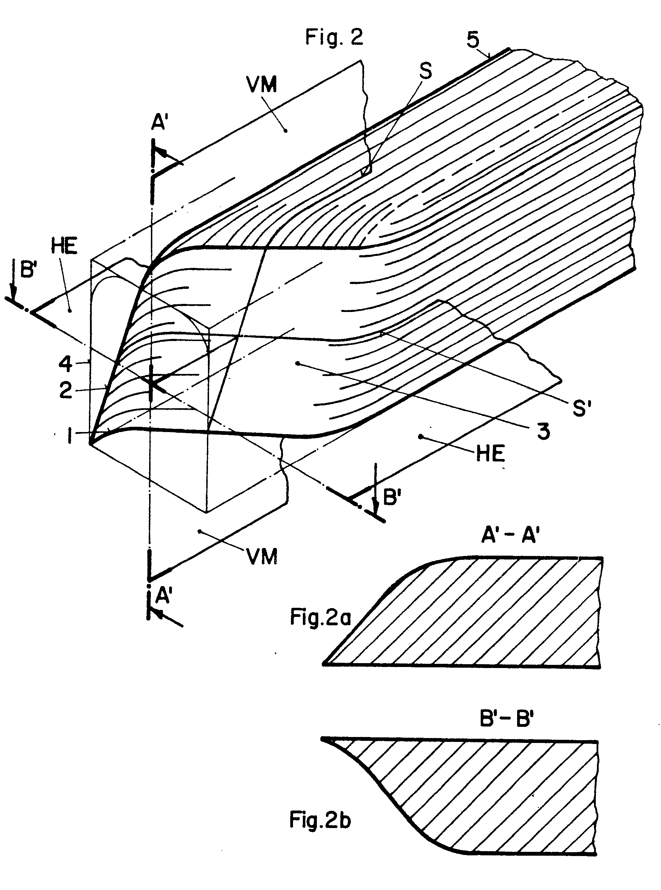

Das Schienenfahrzeug mit einer Kopfform nach Fig. 2 weist im Bereich seiner Frontkante 2 einen konkav auslaufenden Keil 1 auf.

Die Querschnitte A'-A' und B'-B', Fig. 2a bzw. 2b illustrieren diese aus strömungstechnischen Gründen bevorzugte Kopfform.

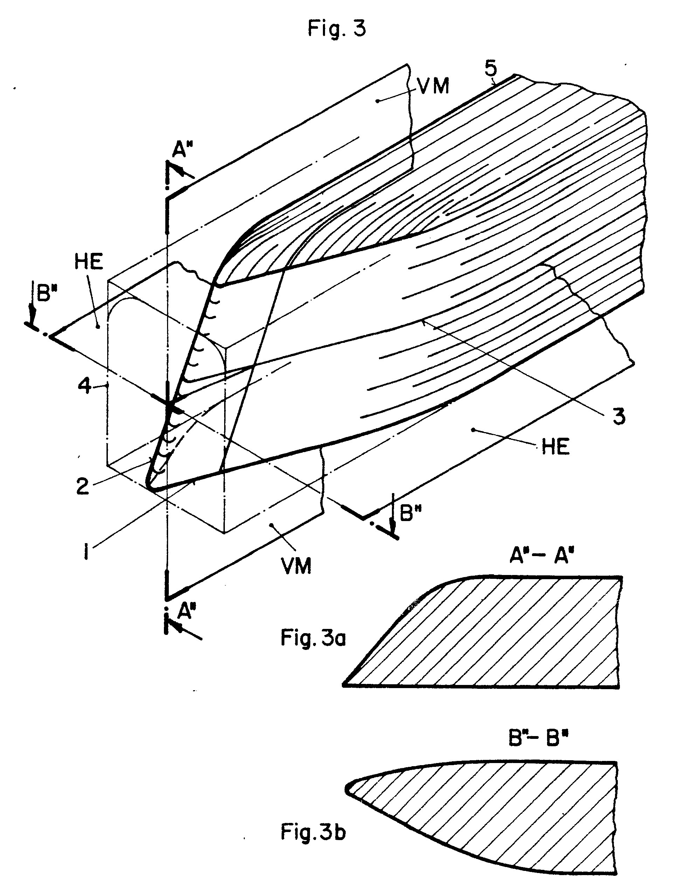

Die in Fig. 3 dargestellte Kopfform weist im Bereich ihrer Frontkante 2 eine charakteristische Rundung des an sich ebenfalls spitzwinkligen Keils 1 auf. Die Frontkante 2 ist jedoch gegenüber der Ausführung nach Fig. 1 in Querrichtung nach der Fahrzeugmitte hin leicht versetzt.

Die Fig. 3a und 3b zeigen wiederum den Profilverlauf im Längsschnitt A''-A'' im vertikalen Mittelschnitt VM und B''-B'' in der Horizontalebene HE.

Die Figuren 1-3 stellen idealisierte Grundformen zur erfindungsgemässen Anwendung des in Anspruch 1 genannten Verfahrens dar und lassen sich auch in modifizierter Form sowohl frontseitig als auch heckseitig an Schienenfahrzeugen anwenden.

Sämtlichen Formen gemeinsam ist ihre Asymmetrie bezüglich des vertikalen Mittelschnittes VM.

Diese Asymmetrie reduziert auch bei eingleisigen Strecken — ohne Gegenverkehr — die aerodynamische Kopf- und Heckwelle, was sich insbesondere bei engen Tunneleinfahrten positiv auswirkt.

Ebenfalls ergibt sich eine Reduktion der Kopf- und Heckwelle auch auf den sogenannten « voies banalisées », wo bekanntlich die Fahrrichtung für jedes einzelne Geleise beliebig sein kann.

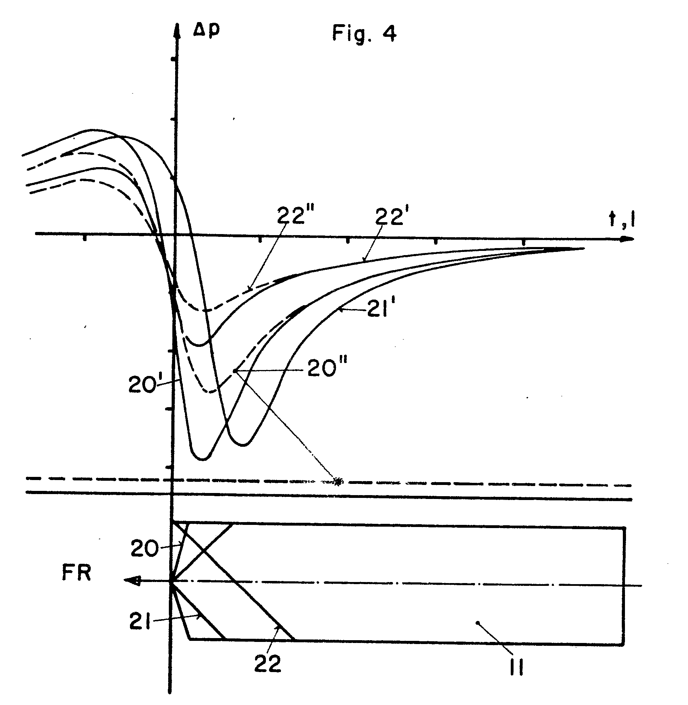

Anhand der in Fig. 4 aufgezeigten Berechnungsresultate lassen sich interessante qualitative Vergleiche unterschiedlicher Kopfformen und der daraus resultierenden Druckverhältnisse bezogen auf Atmosphärendruck = 0 gewinnen.

Ein in einem gewissen, durch die ausgezogene längsachsparallele Linie charakterisierten Abstand an einem in Fahrrichtung FR am Gegenzug vorbeifahrenden Triebfahrzeug 11 mit einer keilförmigen achssymmetrischen Front 20 ergibt einen Druck- und Sogverlauf $\Delta P$ nach der Kurve 20'; in einem durch die gestrichelte Linie markierten, grösseren Abstand vom Gegenzug entsteht ein Kurvenverlauf nach 20''.

Eine weitere keilförmige achssymmetrische Front nach 21 bewirkt einen Kurvenverlauf nach 21'.

Demgegenüber ergibt eine asymmetrische Front 22 einen Kurvenverlauf 22' bzw. 22'' für den Fall des kleineren bzw. grösseren Abstandes des Gegenzuges.

Der Winkel $\alpha$ gemäss Fig. 1 betrug in sämtlichen, den Berechnungen zugrunde gelegten Fällen 0°.

Fig. 4 ist nicht nur für den zeitlichen Druckverlauf massgebend, sondern widerspiegelt auch den in Fahrrichtung herrschenden örtlichen Druckverlauf längs des Triebfahrzeugs 11 ; Abszisse t, 1.

Trotz einfacher geometrischer Verhältnisse am Kopf 22 des Triebfahrzeugs weist Kurve 22' gegenüber Kurve 20' einer konventionellen Kopfform 20 nur etwa 50 % der Amplitude der Druck- und Sog-Schwingung auf.

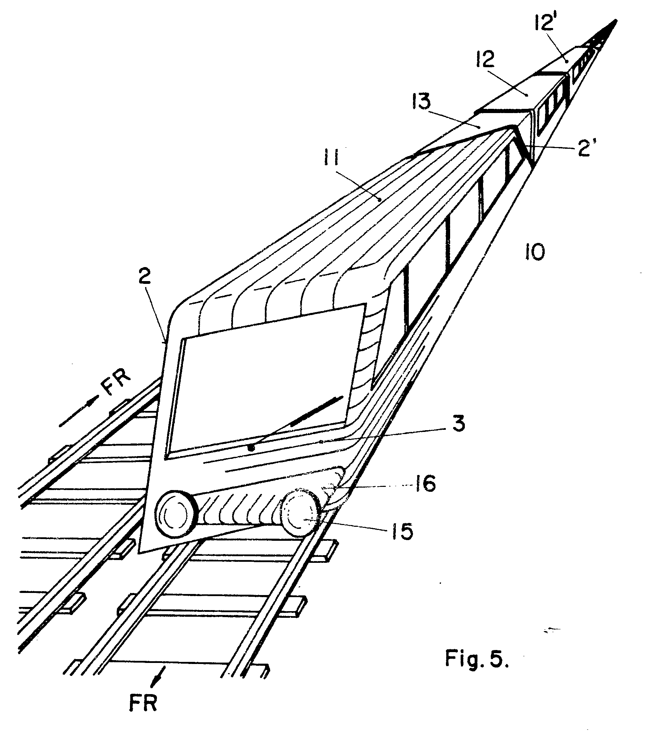

In Fig. 5 ist eine Zugskomposition 10 bestehend aus einem Triebfahrzeug 11 und nachfolgenden Wagen 12, 12' auf einer Doppelspurlinie dargestellt.

Die Fahrrichtungen sind wiederum mit FR bezeichnet (Linksverkehr).

Frontseitig sind auf der Stirnwand 3 Puffer 15 aufgesetzt, welche eine strömungsgünstige Verkleidung 16 aufweisen.

Durch eine dem Gesamtprofil der Zugskomposition 10 angepasste Verschalung 13 zwischen dem Triebfahrzeug 11 und dem ersten nachfolgenden Wagen 12 konnte hier die ebenfalls gefürchtete Heckwelle minimalisiert, der Luftwiderstand verkleinert und eine Zugänglichkeit des Triebfahrzeugs 11 von seiten des Wagens 12 geschaffen werden.

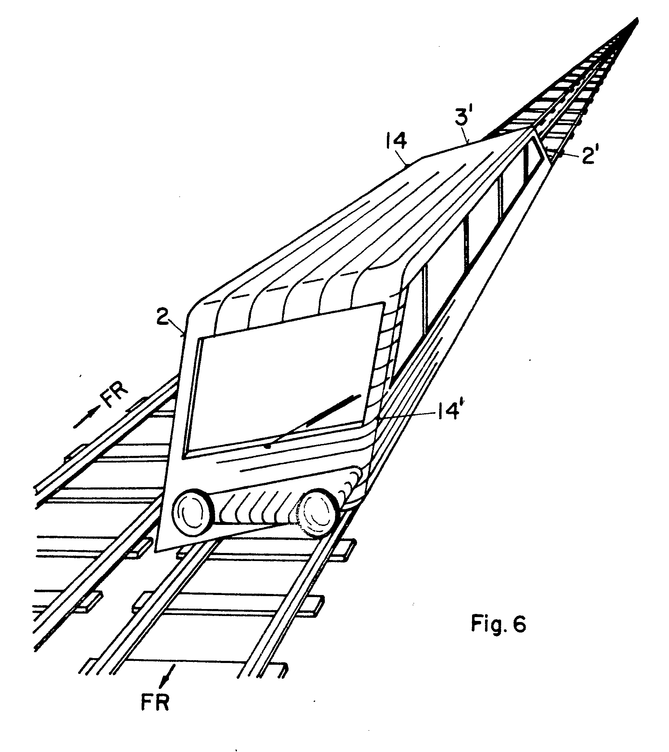

Die in Fig. 5 dargestellte Zugskomposition 10 unter Verwendung der Verschalung 13 ist vorwiegend für gleichbleibende Fahrrichtung gedacht. Statt der Verschalung 13 kann zur Reduktion des Strömungswiderstands sowie der Druck- und Sogwellen gemäss Fig. 6 eine leistenförmige Strömungs-Abrisskante 14 auf der dem Gegenverkehr zugewandten Seite des Hecks des Triebfahrzeugs 11 Verwendung finden. Durch gleichzeitige zentralsymmetrische Anordnung einer entsprechenden Abrisskante 14' an der Frontseite und deren Ausgestaltung als ein- und ausfahrbare Leiste kann das Triebfahrzeug 11 gegenüber der Fahrrichtung vollständig symmetrisch ausgeführt werden, so dass ein Fahrrichtungswechsel jederzeit möglich ist. Die Abrisskante ist an der jeweiligen Frontseite eingefahren, d. h. unwirksam, während sie an der jeweiligen Heckseite ausgefahren ist. Das Ein- und Ausfahren der Abrisskante 14 bzw. 14' kann mit dem Wendeschalter bzw. der Führerstandsbesetzung des Triebfahrzeugs 11 kombiniert und automatisch geschaltet werden.

Aus den Fig. 5 und 6 ist die bevorzugt dem Gegenverkehr zugewandte Lage der Frontkante 2 und der dazu zentralsymmetrisch angeordneten, dem Gegenverkehr abgewandten Lage der Heckkante 2' ersichtlich.

Es versteht sich von selbst, dass entsprechend Fig. 5 und 6 die Heckwand des letzten Wagens 12' der Zugskomposition 10 in Fig. 5 ebenfalls in vorteilhafter Weise abgeschrägt sein kann. Dies gilt vor allem für gleichbleibende Zugskompositionen wie Vororts- und Pendelzüge sowie Untergrundbahnen.

Das dem Erfindungsgegenstand zugrunde liegende Verfahren ist nicht auf die dargestellten und beschriebenen Beispiele beschränkt. Die Erfindung eignet sich hervorragend für die Neukonzeption von Verkehrssystemen wie Einschienen- und Hängebahnen etc.

Ebenfalls als sehr vorteilhaft haben sich die erfindungsgemäss gestalteten Kopf- und Heckformen in bezug auf die resultierenden Strömungswiderstände und die Seitenwindempfindlichkeit bei Geschwindigkeiten über 100 km/h erwiesen.

## Ansprüche

1. Schienenfahrzeug für hohe Geschwindigkeiten mit einer zum Herabsetzen der aerodynamischen Wellen bestimmten Kopf- und/oder Heckform mit wenigstens einer die Front- und/oder Heckseite abgrenzenden Stirnwand (3, 3'), wobei wenigstens die eine Stirnwand (3, 3') an die übrigen Oberflächenteile des Fahrzeugs angeschlossen ist, dadurch gekennzeichnet, dass diese wenigstens eine Stirnwand (3, 3') einen in bezug auf den vertikalen Mittelschnitt (VM) des Fahrzeugs asymmetrischen und asymmetrisch angeordneten Keil (1) bildet, dessen engster Teil mit der Vertikalachse (A-A) einen spitzen Winkel einschliesst und dass dieser Keil (1) mit seiner Frontkante (2) dem Gegenverkehr zugewandt bzw. mit seiner Heckkante (2') dem Gegenverkehr abgewandt ist (Fig. 1, Fig. 6).

2. Schienenfahrzeug nach Anspruch 1, dadurch gekennzeichnet, dass es eine zur Fahrrichtung schief stehende, weningstens annähernd ebene Stirnwand (3) aufweist, deren Schnittlinie (S') in der Horizontalebene (HE) mit der Querachse (B-B) des Fahrzeugs einen Winkel (β) von 15°-60° und deren Schnittlinie (S) im vertikalen Mittelschnitt (VM) mit der Vertikalachse (A-A) des Fahrzeugs einen Winkel (α) von − 25° bis + 60° bildet (Fig. 1).

3. Schienenfahrzeug nach Anspruch 1 oder 2, dadurch gekennzeichnet, dass wenigstens der Zwischenraum zwischen dem Triebfahrzeug (11) und dem ersten nachfolgenden Wagen (12) eine dem Profil beider Fahrzeuge angepasste Verschalung (13) aufweist (Fig. 5).

4. Schienenfahrzeug nach Anspruch 1 oder 2, dadurch gekennzeichnet, dass im Bereich der Heckseite wenigstens partiell mindestens eine Strömungs-Abrisskante (14) vorhanden ist (Fig. 6).

5. Schienenfahrzeug nach Anspruch 2 oder 3, dadurch gekennzeichnet, dass im Bereich der Front- und Heckseite wenigstens eine ausfahrbare oder klappbare Strömungs-Abrisskante (14', 14) vorhanden ist (Fig. 6).

## Claims

1. High-speed rail vehicle including a head and/or tail design for reducing aerodynamic pressure waves, said design comprising at least one end wall (3, 3') defining the head and/or tail face and at least one of said end walls (3, 3') being continuous with the remaining surface portions of said vehicle, characterised in that said at least one end wall (3, 3') forms a wedge (1) that is asymmetric and asymmetrically disposed with respect to the vertical middle section (VM) of the vehicle, the pointed portion of said wedge (1) forming an acute angle with the vertical axis (A-A), and that the front edge (2) formed by said wedge (1) is disposed toward the oncoming traffic and the tail edge (2') formed by said wedge (1) is disposed away from the oncoming traffic (Fig. 1, Fig. 6).

2. Rail vehicle as set forth in Claim 1 characterised in that the vehicle comprises and at least approximately plane end wall (3), oblique with respect to the direction of travel, the line of section (S') thereof which extends in the horizontal plane (HE) forming an angle (β) in the range of 15 to 60 degrees with the transverse vehicle axis (B-B) and the line of section (S) thereof which extends in the vertical middle section (VM) forming an angle (α) in the range of − 125 to + 60 degrees with the vertical vehicle axis (A-A) (Fig. 1).

3. Rail vehicle as set forth in Claim 1 or Claim 2 characterised in that at least the intermediate space between the motor vehicle (11) and the first carriage (12) following the same has a covering (13) that is matched to the profile of both said motor vehicle and said carriage (Fig. 5).

4. Rail vehicle as set forth in Claim 1 or Claim 2 characterised in that at least in part of the region of the tail face at least one air flow breakaway edge (14) is present (Fig. 6).

5. Rail vehicle as set forth in Claim 2 or Claim 3 characterised in that at least one extendable or collapsible air flow breakaway edge (14', 14) is present in the region of the front face and the tail face (Fig. 6).

## Revendications

1. Véhicule ferroviaire à grande vitesse présen-tant une forme déterminée à l'avant et/ou à l'arrière pour réduire les ondes aérodynamiques et comportant une paroi frontale (3, 3') délimitant le côté avant et/ou le côté arrière, l'une (3, 3') des parois frontales étant raccordée aux autres parties surfaciques du véhicule, caractérisé en ce que cette paroi frontale (3, 3') forme un coin (1) asymétrique et disposé asymétriquement par rapport au plan de coupe vertical médian (VM) du véhicule, coin dont la partie la plus étroite fait un angle aigu avec l'axe vertical (A-A), et en ce que ce coin (1) a son arête avant (2) tournée vers le trafic en sens inverse, et son arête arrière (2') opposée au trafic en sens inverse (Fig. 1, Fig. 6).

2. Véhicule ferroviaire selon la revendication 1, caractérisé en ce qu'il comporte une paroi frontale (3) au moins approximativement plane, placée en oblique par rapport au sens de la marche, dont la ligne de coupe (S') dans le plan horizontal (HE) fait avec l'axe transversal (B-B) du véhicule un angle (β) de 15°-60° et dont la ligne de coupe (S) dans le plan de coupe vertical médian (VM) fait avec l'axe vertical (A-A) du véhicule un angle (α) de − 25° à + 60° (Fig. 1).

3. Véhicule ferroviaire selon la revendication 1 ou 2, caractérisé en ce qu'au moins l'espace intermédiaire. entre le véhicule moteur (11) et le premier wagon suivant (12) comporte un carénage (13) adapté au profil des deux véhicules (Fig. 5).

4. Véhicule ferroviaire selon la revendication 1 ou 2, caractérisé en ce qu'il y a, dans la zone du côté arrière, au moins une arête de décollement de l'écoulement (14) au moins partielle (Fig. 6).

5. Véhicule ferroviaire selon les revendications 2 ou 3, caractérisé en ce qu'il y a dans la zone du côté avant et du côté arrière au moins une arête de décollement de l'écoulement (14', 14) qui peut être sortie ou rabattue (Fig. 6).

Fig. I

A-A

Fig. Ia

B-B

Fig. Ib

0 008 147

Fig. 2

Fig.2a   A' – A'

Fig.2b   B' – B'

2

Fig. 3

VM
5
A"
HE
B"
4
3
HE
2
I
B"
VM
A"

A" – A"

Fig. 3a

B" – B"

Fig. 3b

Fig. 4

Fig. 5.

Fig. 6